# EUROPÄISCHE PATENTSCHRIFT

(11) **EP 1 458 221 B1**
(45) Veröffentlichungstag und Bekanntmachung des Hinweises auf die Patenterteilung: **23.07.2008**
(21) Anmeldenummer: 04100417.7
(22) Anmeldetag: 05.02.2004
(51) Int. Cl.: H05B 33/14, H05B 33/12, H05B 33/10

(54) **Beleuchtbarer Kunststoff-Formkörper und Verfahren zu dessen Herstellung**
Plastic shaped body capable of being illuminated and method of producing such body
Corps moulé en plastique capable d'être illuminé et procédé de fabrication

(30) Priorität: 14.03.2003 DE 10311335
(43) Veröffentlichungstag der Anmeldung: 15.09.2004
(73) Patentinhaber: Continental Automotive GmbH, 30165 Hannover (DE)
(72) Erfinder: Bolte, Peter, 35418, Buseck (DE)

(56) Entgegenhaltungen:
- EP-A- 1 179 448
- WO-A-98/49871

## Beschreibung

Die Erfindung betrifft einen mit einer Anzeigefunktion versehenen, beleuchtbarer Kunststoff-Formkörper, der einen Kunststoffgrundkörper und eine dem Kunststoffgrundkörper zumindest teilweise überdeckende Kunststofffolie aufweist, wobei zwischen der Kunststofffolie und dem Kunststoffgrundkörper eine Elektrolumineszenz-Funktionsschicht und eine farbige, lichtdurchlässige Schicht derart angeordnet sind, dass die lichtdurchlässige Schicht durch in der Elektrolumineszenz-Funktionsschicht erzeugtes Licht durchleuchtbar ist. Weiterhin betrifft die Erfindung ein Verfahren zur Herstellung eines mit Anzeigefunktion versehen, beleuchtbaren Kunststoff-Formkörpers durch Hinterspritzen einer mit einer farbigen, lichtdurchlässige Schicht und einer Elektrolumineszenz-Funktionsschicht versehenen Kunststofffolie zur Herstellung des Kunststoff-Formkörpers derart, dass die lichtdurchlässige Schicht und die Elektrolumineszenz-Funktionsschicht zwischen der Kunststofffolie und dem hinterspritzten Kunststoffmaterial angeordnet sind.

Aus der DE 197 17 740 C2 ist ein Kunststoff-Formkörper mit integriertem optoelektronischen Leuchtfeld und ein Verfahren zu dessen Herstellung bekannt. Eine 100 bis 300 µm dicke und transparente Folie wird dabei auf der Innenseite zunächst mit einem Graphikdruck versehen, wobei bevorzugt Siebdruckfarben zum Einsatz gelangen. Anschließend werden in diesen Graphikdruck Leuchtfelder eingebettet, die als Elektrolumineszenzschicht mit entsprechenden Teilschichten aufgebaut sind. Die Folie wird anschließend einer stoßartigen isostatischen Hochdruckverformung unterzogen und so in eine dreidimensionale Form gebracht. Anschließend wird die verformte Folie mit thermoplastischem Kunststoff hinterspritzt. Hierdurch wird ein Formkörper erzeugt, der aus der Folie mit den aufgebrachten Schichten und dem durch Hinterspritzen hergestellten Grundkörper besteht. Durch die Elektrolumineszenzschicht kann eine Beleuchtung des Formkörpers erreicht werden, wobei die eingebettete Graphik sichtbar ist. Nachteilig ist bei diesem Formkörper jedoch, dass die Graphik auch dann sichtbar ist, wenn der Formkörper nicht durch die Elektrolumineszenzschicht beleuchtet ist. Weiterhin ist nachteilig, dass die Folie beim Hinterspritzen sehr genau positioniert sein muss, damit die Graphik korrekt auf dem Formteil angeordnet ist.

In der nicht vorveröffentlichten Patentanmeldung DE 102 34 125.7 der Anmelderin wird ebenfalls ein beleuchtbares Kunststoffspritzgussteil mit einer Anzeigefunktion und ein Verfahren zu dessen Herstellung beschrieben. Bei dem Kunststoffspritzgussteil kann es sich beispielsweise um ein Bedienteil eines Schalters oder Tasters für Kraftfahrzeuge handeln. Zur Herstellung eines Leuchtsymbols wird vorgeschlagen, die Elektrolumineszenzfolie bzw. das Spritzgussteil zu lackieren, wobei die Lackierung der Elektrolumineszenzfolie teilweise wieder entfernt wird, insbesondere mittels eines Lasers. Durch das Abtragen der Lackierung auf der Elektrolumineszenzfolie kann somit ein Leuchtsymbol an der korrekten Position hergestellt werden. Analog zur Lackierung kann auch eine PVD-Beschichtung (sputtern) im sichtbaren Oberflächenbereich vorgesehen sein. Die so erzeugte Metallbeschichtung wird dann ebenfalls mittels eines Lasers partiell freigestellt, so dass die darunter befindliche Elektrolumineszenzfolie als Symbol zum Vorschein kommt. Nachteilig ist auch hierbei, dass das Symbol stets sichtbar ist. In einer anderen Variante wird dort vorgeschlagen eine galvanische Schicht auf das Kunststoffmaterial und die Elektrolumineszenzfolie aufzubringen, wobei ein Teilbereich auf der Elektrolumineszenzfolie maskiert ist, so dass dieser Teilbereich von der Beschichtung freigehalten wird. Der Teilbereich ist als Symbol ausgebildet. Auch bei dieser Ausgestaltung ist das Symbol stets sichtbar, auch dann wenn das Spritzgussteil nicht durch die Elektrolumineszenzfolie beleuchtet wird.

Aufgabe der Erfindung ist es daher, einen mit einer Anzeigefunktion versehenen, beleuchtbaren Kunststoff-Formkörper derart weiterzubilden, dass ein Symbol (Ornament) einen sogenannten Verschwindeeffekt aufweist, d. h. im unbeleuchteten Zustand nicht oder praktisch nicht sichtbar ist. Eine weitere Aufgabe der Erfindung besteht darin, ein Verfahren zur Herstellung eines solchen Formkörpers anzugeben, mit dem die korrekte Positionierung des Symbols (Ornaments) erreicht werde kann.

Die erstgenannte Aufgabe wird bei einem gattungsgemäßen Kunststoff-Formkörper dadurch gelöst, dass auf der dem Kunststoff-Grundkörper abgewandten Fläche der Kunststofffolie eine farbige, lichtundurchlässige Schicht mit als Ornament ausgebildeter Ausnehmung vorhanden ist.

Der erfindungsgemäße Formkörper weist somit zwei farbige Schichten auf. Die erste farbige Schicht ist lichtdurchlässig ausgebildet, während die zweite farbige Schicht lichtundurchlässig ausgebildet ist, jedoch eine als Ornament ausgebildete Ausnehmung aufweist. Wird nun von der Elektrolumineszschicht Licht ausgesendet, so kann dieses durch die lichtdurchlässige Schicht hindurchtreten. Die lichtundurchlässige Schicht verhindert jedoch einen Durchtritt des Lichts außer an den Stellen, an denen in die lichtundurchlässige Schicht die als Ornament ausgebildete Ausnehmung eingebracht wurde. Ein Betrachter wird deshalb das beleuchtete Ornament umgeben von der lichtundurchlässigen Schicht wahrnehmen. Ist die Elektrolumineszenz-Funktionsschicht nicht aktiviert und sendet somit kein Licht aus, so nimmt der Betrachter die lichtundurchlässige Schicht und an den Stellen, an denen die lichtundurchlässige Schicht die Ausnehmungen des Ornaments aufweist, die lichtdurchlässige Schicht wahr. Da es sich sowohl bei der lichtundurchlässigen als auch bei der lichtdurchlässigen Schicht um farbige Schichten handelt, wird der Betrachter zumindest dann, wenn die lichtdurchlässige Schicht und die lichtundurchlässige Schicht aus im optischen Erscheinungsbild gleichartigen Material bestehen, das Ornament nicht mehr wahrnehmen. Hierdurch entsteht ein sogenannter Verschwindeeffekt, d. h. das Symbol ist nur dann deutlich sichtbar, wenn die Elektrolumineszenz-Funktionsschicht aktiviert ist und Licht aussendet.

Die lichtdurchlässige und lichtundurchlässige Schicht können insbesondere als Farbschichten ausgebildet sein. Dies hat den Vorteil, dass unterschiedlichste Farben des Kunststoff-Formkörpers realisiert werden können. Die Farbschichten können insbesondere durch Druckverfahren wie beispielsweise Siebdruck aufgebracht werden. Die lichtdurchlässige Schicht kann dabei beispielsweise durch einen Rasterdruck erzeugt werden.

In einer anderen Ausführungsform sind die lichtdurchlässige und die lichtundurchlässige Schicht metallische Schichten. Hierdurch kann ein Formkörper mit einem besonders hochwertigem metallischen Erscheinungsbild erzeugt werden. Das Aufbringen der metallischen Schichten kann dabei insbesondere durch PVD (sputtern) erfolgen.

Die lichtundurchlässige Schicht und vorzugsweise auch die Ausnehmung in der lichtundurchlässigen Schicht können mit einer Klarlackschicht abgedeckt werden. Hierdurch wird ein Schutz der lichtundurchlässigen Schicht erzielt und einer Veränderung des optischen Erscheinungsbilds durch z. B. häufiges Berühren entgegengewirkt.

Bei dem Formkörper kann es sich insbesondere um eine Taste handeln. Derartige Tasten werden beispielsweise in Kraftfahrzeugbedienelementen eingesetzt. Aufgrund der Beleuchtung der Taste kann einem Benutzer signalisiert werden, ob eine mit der Taste verbundene Funktion aktiviert ist oder nicht.

Ein erfindungsgemäßes Verfahren zur Herstellung eines mit einer Anzeigefunktion versehenen, beleuchtbaren Kunststoff-Formkörpers weist die folgenden Verfahrensschritte auf:
- Hinterspritzen einer mit einer farbigen, lichtdurchlässigen Schicht und einer Elektrolumineszenz-Funktionsschicht versehenen Kunststofffolie zur Herstellung des Kunststoff-Formkörpers derart, dass die lichtdurchlässige Schicht und die Elektrolumineszenz-Funktionsschicht zwischen der Kunststofffolie und dem hinterspritzten Kunststoffmaterial angeordnet sind,
- Aufbringen einer lichtundurchlässigen Schicht auf die Kunststofffolie und
- teilweises Entfernen der lichtundurchlässigen Schicht zur Erzeugung einer als Ornament ausgebildeten Ausnehmung in der lichtundurchlässigen Schicht. Das teilweise Entfernen der lichtundurchlässigen Schicht erfolgt vorzugsweise mittels eines Lasers.

Die Erfindung wird nachfolgend anhand von Ausführungsbeispielen und der Zeichnung näher erläutert. Es zeigen:
- Fig. 1: ein Kunststoffformteil in verschiedenen Fertigungsstufen nach einer ersten Verfahrenvariante,
- Fig. 2: ein Kunststoffformteil in verschiedenen Fertigungsstufen nach einer zweiten Verfahrensvariante,
- Fig. 3: den Aufbau einer Elektrolumineszenz-Funktionsschicht.

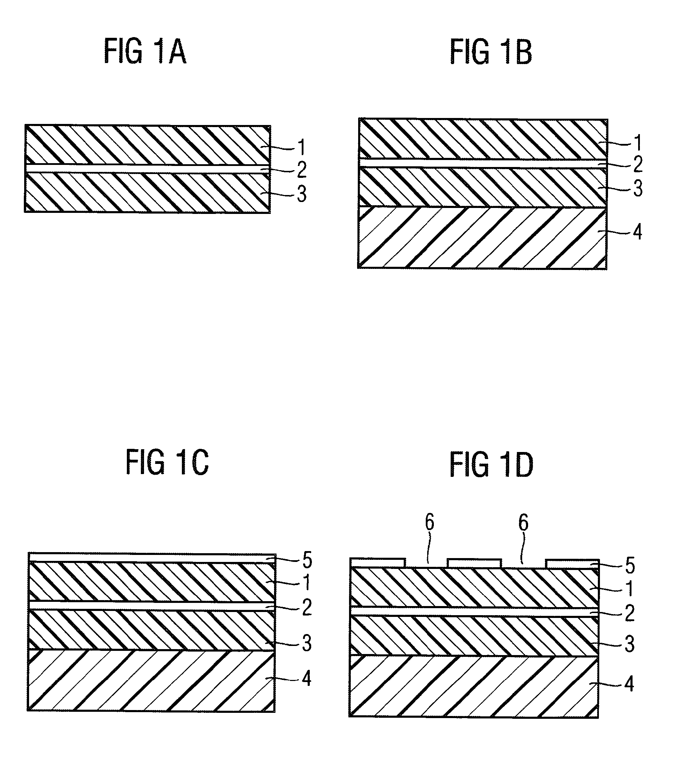

Fig. 1a zeigt einen Schnitt durch die beschichtete Kunststofffolie 1 mit den darauf aufgebrachten Schichten, nämlich der lichtdurchlässigen Farbschicht 2 und der Elektrolumineszenz (EL)-Funktionsschicht 3. Die lichtdurchlässige Farbschicht 2 ist direkt auf die Kunststofffolie 1 durch Siebdruck aufgebracht. Bei der Farbschicht kann es sich beispielsweise um eine Schicht mit dem optischen Erscheinungsbild einer Chromschicht handeln. Die EL-Funktionsschicht 3 ist auf die lichtdurchlässige Farbschicht 2 aufgebracht.

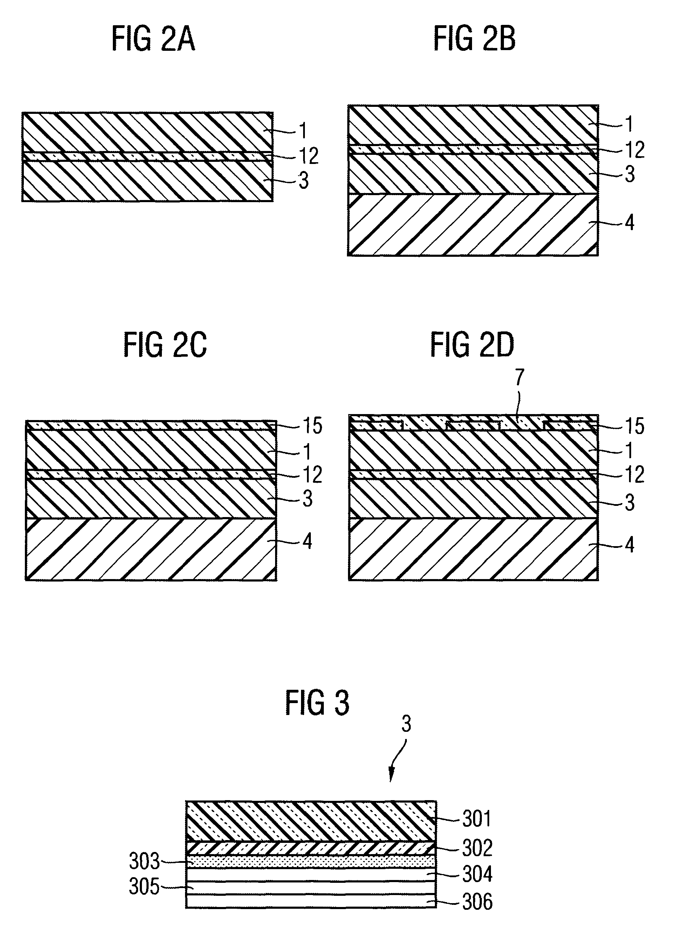

Der prinzipielle Aufbau der EL-Funktionsschicht 3 ist in Fig. 3 dargestellt. Auf einer Trägerfolie 301, die beispielsweise aus transparentem PC besteht, ist zunächst eine transparente, leitfähige Schicht 302 aufgebracht, die die erste Kontaktstelle bildet. Auf die leitfähige Schicht 302 ist die eigentliche Leuchtschicht (Phosphor) 303 aufgebracht. Auf die Leuchtschicht 303 ist als Isolator und Reflexionsschicht ein Dielektrikum 304 aufgebracht. Auf das Dielektrikum 304 ist eine weitere leitfähige Schicht 305 als zweite Kontaktstelle aufgebracht. Die leitfähige Schicht 305 ist schließlich mit einer Schutzschicht 306 versehen.

Die in Fig. 1a dargestellt Kunststofffolie mit der lichtdurchlässigen Schicht 2 und der EL-Funktionsschicht 3 wird durch Tiefziehen dreidimensional verformt, um die Form des späteren fertigen Formkörpers anzunehmen. Die verformte Kunststofffolie 1 wird in ein Spritzgusswerkzeug eingelegt und in bekannter Weise mit einem Kunststoffmaterial hinterspritzt.

Fig. 1b zeigt einen Schnitt durch das so erhaltene Zwischenprodukt nach dem Hinterspritzen mit Kunststoffmaterial. Die Kunststofffolie 1 mit der lichtdurchlässigen Schicht 2 und der EL-Funktionsschicht 3 ist dabei mit dem aus Kunststoffmaterial bestehenden Grundkörper 4 vereint, wobei der Grundkörper 4 wie oben erwähnt durch Hinterspritzen der Folie erzeugt wurde.

Auf die dem Grundkörper 4 abgewandte Seite der Kunststofffolie 1 wird anschließend eine lichtundurchlässige Farbschicht 5 aufgetragen. Hierbei handelt es sich wiederum um einen Lack, dessen optisches Erscheinungsbild einer Chromschicht entspricht.

Anschließend werden mittels eines Lasers in der lichtundurchlässigen Schicht 5 als Ornamente ausgebildete Ausnehmungen 6 erzeugt. Fig. 1d zeigt einen entsprechenden Schnitt durch das Fertigbauteil mit Kunststoffgrundkörper 4, der EL-Funktionsschicht 3, der lichtdurchlässigen Farbschicht 2, der Kunststofffolie 1 sowie der lichtundurchlässigen Farbschicht 5 mit den Ausnehmungen 6.

Fig. 2 zeigt Schnitte durch verschiedene Zwischenprodukte zur Herstellung eines zweiten erfindungsgemäßen Formteils. Fig. 2a zeigt einen Schnitt durch die Kunststofffolie 1 mit darauf aufgebrachter lichtdurchlässiger PVD-Schicht 12 und EL-Funktionsschicht 3. Bei der lichtdurchlässigen PVD-Schicht handelt es sich beispielsweise um eine entsprechende Aluminiumschicht. Die in Fig. 2a dargestellte Kunststofffolie mit den aufgebrachten Schichten wird anschließend wie im ersten Ausführungsbeispiel einem Tiefziehvorgang unterzogen, in ein Spritzgießwerkzeug eingelegt und mit Kunststoffmaterial hinterspritzt. Fig. 2b zeigt einen entsprechenden Schnitt durch das so erhaltene Zwischenprodukt. Dieses Zwischenprodukt wird derart weiterverarbeitet, dass auf die Kunststofffolie 1 eine weitere PVD-Beschichtung aufgebracht wird. Auch hierbei handelt es sich beispielsweise wiederum um eine Aluminiumschicht, die nunmehr lichtundurchlässig ausgebildet ist. Fig. 2c zeigt einen Schnitt durch das entsprechende Zwischenprodukt mit dem Grundkörper 4, der EL-Funktionsschicht 3, der lichtdurchlässigen PVD-Schicht 12, der Kunststofffolie 1 und der lichtundurchlässigen PVD-Schicht 15. Analog zum ersten Ausführungsbeispiel werden in die undurchlässige PVD-Beschichtung mittels eines Lasers als Ornamente ausgebildete Ausnehmungen eingebracht. In einem letzten Schritt wird schließlich die sichtbare Oberfläche, d. h. die lichtundurchlässige PVD-Schicht 15 mit einem Klarlack überzogen. Hierbei werden auch die Ausnehmungen durch den Klarlack aufgefüllt, so dass eine glatte Oberfläche des Bauelements entsteht. Fig. 2d zeigt einen Schnitt durch das fertige Formteil.

Das Kunststoffformteil kann beispielsweise als Taste eines Kraftfahrzeugbedienelementes ausgebildet sein. Durch Anlegen einer Spannung an die EL-Funktionsschicht 3 wird diese zum Leuchten gebracht. Das so erzeugte Licht kann durch die Ausnehmungen 6 hindurchtreten, so dass ein Betrachter ein beleuchtetes Symbol auf der Taste erkennt. Ist die Beleuchtung jedoch ausgeschaltet, so nimmt der Betrachter die lichtundurchlässige Metallschicht und an der Stelle der Ausnehmungen die lichtdurchlässige Metallschicht wahr, so dass für den Betrachter ein einheitlicher Gesamteindruck entsteht, bei dem das Symbol nicht sichtbar ist. Durch die Aufbringung des Symbols nach dem Hinterspritzen der Kunststofffolie wird zudem gewährleistet, dass dieses immer am gewünschten Ort angebracht ist. Örtliche Abweichungen die ansonsten beim Hinterspritzen einer das Symbol bereits aufweisenden Kunststofffolie entstehen können, werden somit sicher vermieden.

## Patentansprüche

1. Mit einer Anzeigefunktion versehener, beleuchtbarer Kunststoff-Formkörper, der einen Kunststoffgrundkörper (4) und eine den Kunststoffgrundkörper (4) zumindest teilweise überdeckende Kunststofffolie (1) aufweist, wobei zwischen der Kunststofffolie (1) und dem Kunststoffgrundkörper (4) eine Elektrolumineszenz-Funktionsschicht (3) und eine farbige, lichtdurchlässige Schicht (2, 12) derart angeordnet sind, dass die lichtdurchlässige Schicht (2, 12) durch in der Elektrolumineszenz-Funktionsschicht (3) erzeugtes Licht durchleuchtbar ist, **dadurch gekennzeichnet, dass** auf der dem Kunststoffgrundkörper (4) abgewandten Fläche der Kunststofffolie (1) eine farbige, lichtundurchlässige Schicht (5, 15) mit als Ornament ausgebildeter Ausnehmung (6) vorhanden ist.

2. Formkörper nach Anspruch 1, **dadurch gekennzeichnet, dass** die lichtdurchlässige Schicht (2) und die lichtundurchlässige Schicht (5, 15) aus im optischen Erscheinungsbild gleichartigem Material bestehen.

3. Formkörper nach einem der vorhergehenden Ansprüche, **dadurch gekennzeichnet, dass** die lichtdurchlässige Schicht (2) und die lichtundurchlässige Schicht (5) Farbschichten sind.

4. Formkörper nach einem der vorhergehenden Ansprüche 1 oder 2, **dadurch gekennzeichnet, dass** die lichtdurchlässige Schicht (12) und die lichtundurchlässige Schicht (15) metallische Schichten sind.

5. Formkörper nach einem der vorhergehenden Ansprüche, **dadurch gekennzeichnet, dass** die lichtundurchlässige Schicht (5, 15) mit einer Klarlackschicht (7)abgedeckt ist.

6. Formkörper nach einem der vorhergehenden Ansprüche, **dadurch gekennzeichnet, dass** der Formkörper als Taste ausgebildet ist.

7. Verfahren zur Herstellung eines mit einer Anzeigefunktion versehenen, beleuchtbaren Kunststoff-Formkörpers durch
- Hinterspritzen einer mit einer farbigen, lichtdurchlässigen Schicht (2, 12) und einer Elektrolumineszenz-Funktionsschicht (3) versehenen Kunststofffolie (1) zur Herstellung des Kunststoff-Formkörpers derart, dass die lichtdurchlässige Schicht (2, 12) und die Elektrolumineszenz-Funktionsschicht (3) zwischen der Kunststofffolie (1) und dem hinterspritzten Kunststoffmaterial (Grundkörper 4) angeordnet sind
- Aufbringen einer lichtundurchlässigen Schicht (5, 15) auf die Kunststofffolie (1) und
- teilweises Entfernen der lichtundurchlässigen Schicht (5, 15) zur Erzeugung einer als Ornament ausgebildeten Ausnehmung (6) in der lichtundurchlässigen Schicht (5, 15).

8. Verfahren nach Anspruch 7, **dadurch gekennzeichnet, dass** das teilweise Entfernen der lichtundurchlässigen Schicht mittels eines Lasers erfolgt.

9. Verfahren nach Anspruch 7 oder 8, **dadurch gekennzeichnet, dass** die lichtundurchlässige Schicht (15) als Metallschicht durch PVD-Beschichtung der Kunststofffolie erzeugt wird.

10. Verfahren nach Anspruch 7 oder 8, **dadurch gekennzeichnet, dass** die lichtundurchlässige Schicht (5) als Farbschicht, insbesondere als Farbschicht mit metallischen Aussehen, erzeugt wird.

11. Verfahren nach einem der vorhergehenden Ansprüche, **dadurch gekennzeichnet, dass** auf die lichtundurchlässige Schicht (5, 15) eine Klarlackschicht (7) aufgetragen wird.

## Claims

1. Illuminable plastic shaped body provided with a display function and having a plastic base body (4) and a plastic film (1) at least partly covering the plastic base body (4), an electroluminescent functional layer (3) and a coloured, light-transmissive layer (2, 12) being arranged between the plastic film (1) and the plastic base body (4) in such a way that the light-transmissive layer (2, 12) can be transilluminated by light generated in the electroluminescent functional layer (3), **characterized in that** a coloured, light-opaque layer (5, 15) having a cutout (6) formed as ornament is present on that surface of the plastic film (1) which is remote from the plastic base body (4).

2. Shaped body according to Claim 1, **characterized in that** the light-transmissive layer (2) and the light-opaque layer (5, 15) are composed of material of identical type in terms of optical appearance.

3. Shaped body according to any of the preceding claims, **characterized in that** the light-transmissive layer (2) and the light-opaque layer (5) are colour layers.

4. Shaped body according to either of the preceding Claims 1 and 2, **characterized in that** the light-transmissive layer (12) and the light-opaque layer (15) are metallic layers.

5. Shaped body according to any of the preceding claims, **characterized in that** the light-opaque layer (5, 15) is covered with a clearcoat layer (7).

6. Shaped body according to any of the preceding claims, **characterized in that** the shaped body is formed as a button.

7. Method for producing an illuminable plastic shaped body provided with a display function by
- backing a plastic film (1) provided with a coloured, light-transmissive layer (2, 12) and an electroluminescent functional layer (3), by injection-moulding for producing the plastic shaped body in such a way that the light-transmissive layer (2, 12) and the electroluminescent functional layer (3) are arranged between the plastic film (1) and the plastic material (base body 4) introduced behind by injection-moulding,
- applying a light-opaque layer (5, 15) to the plastic film (1), and
- partly removing the light-opaque layer (5, 15) for producing a cutout (6) formed as ornament in the light-opaque layer (5, 15).

8. Method according to Claim 7, **characterized in that** the process of partly removing the light-opaque layer is effected by means of a laser.

9. Method according to Claim 7 or 8, **characterized in that** the light-opaque layer (15) is produced as a metal layer by PVD coating of the plastic film.

10. Method according to Claim 7 or 8, **characterized in that** the light-opaque layer (5) is produced as a colour layer, in particular as a colour layer having a metallic appearance.

11. Method according to any of the preceding claims, **characterized in that** a clearcoat layer (7) is applied to the light-opaque layer (5, 15).

## Revendications

1. Corps moulé en matière plastique pouvant être éclairé et ayant une fonction d'affichage, comportant un corps de base en matière plastique (4) et une membrane en matière plastique (1) recouvrant au moins partiellement le corps de base en matière plastique (4), une couche fonctionnelle électroluminescente (3) et une couche colorée transparente (2, 12) étant placées entre la membrane en matière plastique (1) et le corps de base en matière plastique (4) de manière telle que la couche transparente (2, 12) peut être traversée par de la lumière produite dans la couche fonctionnelle électroluminescente (3), **caractérisé par le fait que**, sur la surface de la membrane en matière plastique (1) opposée au corps de base en matière plastique (4), se trouve une couche colorée opaque (5, 15) comportant un évidement (6) conçu comme ornement.

2. Corps moulé selon la revendication 1, **caractérisé par le fait que** la couche transparente (2) et la couche opaque (5, 15) se composent d'une matière identique en ce qui concerne leur apparence optique.

3. Corps moulé selon l'une des revendications précédentes, **caractérisé par le fait que** la couche transparente (2) et la couche opaque (5) sont des couches de peinture.

4. Corps moulé selon l'une des revendications précédentes 1 ou 2, **caractérisé par le fait que** la couche transparente (2) et la couche opaque (15) sont des couches métalliques.

5. Corps moulé selon l'une des revendications précédentes, **caractérisé par le fait que** la couche opaque (5, 15) est revêtue d'une couche de vernis transparent (7).

6. Corps moulé selon l'une des revendications précédentes, **caractérisé par le fait que** le corps de base est conçu sous la forme d'une touche.

7. Procédé permettant de fabriquer un corps moulé en matière plastique pouvant être éclairé et ayant une fonction d'affichage par
- application par projection d'une matière plastique sur la face arrière d'une membrane en matière plastique (1), destinée à la fabrication du corps moulé en matière plastique et dotée d'une couche colorée transparente (2, 12) et d'une couche fonctionnelle électroluminescente (3), d'une manière telle que la couche transparente (2, 12) et la couche fonctionnelle électroluminescente (3) se trouvent entre la membrane en matière plastique (1) et la matière plastique appliquée par projection sur sa face arrière (corps de base 4),
- mise en place d'une couche opaque (5, 15) sur la membrane en matière plastique (1) et
- suppression partielle de la couche opaque (5, 15) pour produire un évidement (6) formant ornement dans la couche opaque (5, 15).

8. Procédé selon la revendication 7, **caractérisé par le fait que** la suppression partielle de la couche opaque est effectuée au moyen d'un laser.

9. Procédé selon la revendication 7 ou 8, **caractérisé par le fait que** la couche opaque (15) est produite en tant que couche métallique par dépôt en phase gazeuse par procédé physique (pulvérisation cathodique) de la membrane en matière plastique.

10. Procédé selon la revendication 7 ou 8, **caractérisé par le fait que** la couche opaque (5) est produite en tant que couche de peinture, notamment en tant que couche de peinture à aspect métallique.

11. Procédé selon l'une des revendications précédentes, **caractérisé par le fait qu'**une couche de vernis transparent (7) est appliquée sur la couche opaque (5, 15).
